(19) Europäisches Patentamt
European Patent Office
Office européen des brevets

(11) **EP 2 643 128 B1**

(12) **EUROPÄISCHE PATENTSCHRIFT**

(45) Veröffentlichungstag und Bekanntmachung des Hinweises auf die Patenterteilung:
**20.02.2019   Patentblatt 2019/08**

(21) Anmeldenummer: **11779349.7**

(22) Anmeldetag: **31.10.2011**

(51) Int Cl.:
***B25J 9/16*** *(2006.01)*

(86) Internationale Anmeldenummer:
**PCT/EP2011/005500**

(87) Internationale Veröffentlichungsnummer:
**WO 2012/069132 (31.05.2012 Gazette 2012/22)**

(54) **VERFAHREN UND VORRICHTUNG ZUM STEUERN EINER PERIPHERIEKOMPONENTE EINES ROBOTERSYSTEMS**

METHOD AND DEVICE FOR CONTROLLING A PERIPHERAL COMPONENT OF A ROBOT SYSTEM

PROCÉDÉ ET DISPOSITIF DE COMMANDE D'UN COMPOSANT PÉRIPHÉRIQUE D'UN SYSTÈME ROBOTISÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2010   DE 102010052396**

(43) Veröffentlichungstag der Anmeldung:
**02.10.2013   Patentblatt 2013/40**

(73) Patentinhaber: **KUKA Deutschland GmbH 86165 Augsburg (DE)**

(72) Erfinder: **KURTH, Johannes 86163 Augsburg (DE)**

(74) Vertreter: **Schlotter, Alexander Carolus Paul Wallinger Ricker Schlotter Tostmann Patent- und Rechtsanwälte Partnerschaft mbB Zweibrückenstrasse 5-7 80331 München (DE)**

(56) Entgegenhaltungen:
**JP-A- H0 911 176        JP-A- 2001 287 190 US-A1- 2008 077 361        US-A1- 2009 076 657**

• **TSOURVELOUDIS N C ET AL: "Suction control of a robotic gripper: A neuro-fuzzy approach", JOURNAL OF INTELLIGENT AND ROBOTIC SYSTEMS: THEORY AND APPLICATIONS 2000 KLUWER ACADEMIC PUBLISHERS, Bd. 27, Nr. 3, 2000, Seiten 215-235, XP002668973, DOI: DOI:10.1023/A:1008182619159**

**EP 2 643 128 B1**

**Beschreibung**

Die vorliegende Erfindung betrifft ein Verfahren und eine Vorrichtung zum Steuern wenigstens einer Peripheriekomponente eines Robotersystems, insbesondere eines robotergeführten Werkzeugs, sowie ein Rechenmittel zum Vorgeben einer Leistung der Peripheriekomponente.

Während in der Vergangenheit insbesondere die Flexibilität, Fertigungsrate und -genauigkeit von Robotersystemen, d.h. einem oder mehreren, insbesondere kooperierenden, Robotern, optimiert wurde, tritt unter ökologischen und ökonomischen Gesichtspunkten zunehmend deren Energieverbrauch in den Fokus.

Im Betrieb verbrauchen neben dem bzw. den Robotern selber, d.h. ihren Antrieben, auch Peripheriekomponenten, beispielsweise Pneumatikgreifer, Haltemagnete und dergleichen Energie. Ihre Leistung wurde jedoch bislang allenfalls rudimentär an die Prozessrandbedingungen angepasst, wobei aus Sicherheitsgründen meist Maximalwerte zugrundegelegt werden. Durch eine Optimierung der aufgenommenen bzw. abgegebenen Leistung einer oder mehrerer Peripheriekomponenten könnte der Energieverbrauch des Robotersystems reduziert werden.

Die Druckschrift "Suction Control of a Robotic Gripper - A Neuro-Fuzzy Approach" von N. Tsourveloudis, et. al, Journal of Intelligent and Robotic Systems 27: S.215-S.235, 2000, betrifft eine Saugsteuerung zum Ansteuern eines Sauggreifers. Die einzustellende Saugkraft variiert abhängig von Porösität, Gewicht, Robotergeschwindigkeit und -verfahrstrecke. Es wird eine Steuerung auf Basis einer Fuzzy-Regelungsarchitektur vorgeschlagen, die aus zwei Komponenten besteht. Aus einer "Suction Determination Unit" und einer "Suction Generation Unit". Die vom Greifer aufzubringenden Soll-Saugkräfte werden durch eine Fuzzy-Regel ermittelt, die abhängig von den zuvor genannten Parametern ist.

Die US 2009/076657 A1 betrifft ein Steuerungsgerät samt -methode zur Steuerung eines hand-artigen robotischen Greifers. Dazu ist die Roboterhand und der Roboterarm mit Sensoren ausgestattet, um ein Rutschen eines gegriffenen Objektes zu erfassen und somit die Greifkraft entsprechend einzustellen. Zusätzlich wird die Kraft berechnet und eingestellt, die minimal notwendig ist, um das gegriffene Objekt zu halten.

Die US 2008/0077361 A1 betrifft ein Verfahren zur schnellen Berechnung optimaler Kontaktkräfte. Dazu wird ein Verfahren vorgeschlagen, welches aus drei Schritten besteht. Zuerst wird das Problem als konvexes Optimierungsproblem formuliert. Danach wird ein Grenzwertproblems formuliert, welches der konvexen Optimierung zugeordneten ist und einen Genauigkeitsparameter aufweist und drittens wird das Grenzwertproblem mit einem festen Wert für den Genauigkeitsparameter gelöst. Das Verfahren kann in robotischen Applikationen i.V.m. hand-artigen Greifern oder Laufmaschinen angewendet werden.

Aufgabe der vorliegenden Erfindung ist es daher, den Energieverbrauch eines Robotersystems zu reduzieren.

Diese Aufgabe wird durch ein Verfahren mit den Merkmalen des Anspruchs 1 gelöst. Ansprüche 10, 11 stellen eine Vorrichtung bzw. ein Rechenmittel zur Durchführung eines erfindungsgemäßen Verfahrens unter Schutz. Dabei kann ein Mittel im Sinne der vorliegenden Erfindung gleichermaßen Soft- und/oder Hardware umfassen, also insbesondere ein Computerprogramm oder -modul bzw. einen Computer oder eine, insbesondere in einer Roboter-, Zellen- oder Anlagen- bzw. Systemsteuerung integrierte, Recheneinheit, aber auch ein Computerprogrammprodukt wie einen Datenträger oder Speicher mit darauf gespeichertem Programm, welches bei

Ausführung ein erfindungsgemäßes Verfahren zum Vorgeben einer Leistung einer Peripheriekomponente und/oder zum Steuern einer Peripheriekomponente durchführt. Die Unteransprüche betreffen vorteilhafte Weiterbildungen.

Die vorliegende Erfindung basiert auf der Idee, eine Leistung, insbesondere eine ausgeübte oder ausübbare Kraft, einer oder mehrerer Peripheriekomponenten eines Robotersystems während des Betriebs zu verändern und so an eine Kraft anzupassen, die während des Betriebs wirkt und sich in der Regel in Abhängigkeit von einer oder mehreren Roboterposen, insbesondere einer gesamten Roboterbahn, ändert.

Dabei werden zur kompakteren Darstellung vorliegend auch eine Summe von Einzelkräften, beispielsweise Gewichtskraft, Trägheitskräften und durch den Prozess aufgeprägten Kräften wie beispielsweise Reibungskräften, sowie antiparallele Kräftepaare, d.h. Drehmomente, verallgemeinernd als eine Kraft bezeichnet. Umgekehrt kann eine Kraft im Sinne der vorliegenden Erfindung auch eine oder mehrere Komponenten, insbesondere in Wirkrichtung einer Peripheriekomponente, beispielsweise in Halterichtung eines Pneumatikgreifers oder Haltemagneten, bezeichnen.

Als Peripheriekomponente im Sinne der vorliegenden Erfindung wird insbesondere ein Steuer- und unter Leistungsversorgung aktuierbares Gerät verstanden, welches in einen Arbeitsprozess des Robotersystems eingebunden ist, insbesondere ein Werkzeug, vorzugsweise zum Halten eines Werkstücks bzw. einer Nutzlast, wie insbesondere ein mechanischer Greifer, beispielsweise ein Zangen- oder Schiebegreifer, ein Pneumatikgreifer, bei dem in einer oder mehreren Düsen ein Unterdruck gegenüber der Umgebung erzeugt wird, oder ein elektromagnetischer Greifer mit einem oder mehreren steuerbaren Elektromagneten zum Anziehen eines Werkstücks.

Als Leistung wird vorliegend in Verallgemeinerung der fachüblichen Terminologie insbesondere eine einer Peripheriekomponente anlagen- bzw. systemseitig zur Verfügung gestellte, eine von einer Peripheriekomponente aufgenommene oder abgegebene Leistung im physikalischen Sinne, und auch eine von einer Peripheriekomponente ausgeübte Kraft bezeichnet. Sie kann insbesondere durch die Steuerung von Steuerventilen, die beispielsweise eine Druckluftversorgung eines Pneumatikgreifers beeinflussen können, oder durch die Steuerung einer angelegten Spannung, zum Beispiel eines oder mehrerer Elektromagneten und/oder -motoren, eingestellt werden. Insbesondere kann die Leistung einer Peripheriekomponente eingestellt werden, indem ihr Energieverbrauch gesteuert wird. So kann beispielsweise auch die statische Haltekraft, die zum Halten eines Werkstückes benötigt wird, eine Leistung im Sinne der vorliegenden Erfindung bilden, obwohl dabei mangels Weg keine Leistung im physikalischen Sinne verrichtet wird. Entsprechend ist eine Leistung im Sinne der vorliegenden Erfindung auch nicht auf die Dimension der Leistung im physikalischen Sinne als Quotient des Produktes aus Arbeit und Weg, dividiert durch Zeit, beschränkt, sondern kann insbesondere, wie vorstehend erläutert, eine Kraft sein, die eine Peripheriekomponente auf die Umgebung, insbesondere ein Werkstück, vorzugsweise ein von der Peripheriekomponente gehaltenes bzw. fixiertes Werkstück, ausübt oder maximal ausüben kann.

Eine Einstellung einer Leistung kann neben einer, insbesondere posen- oder bahnabschnittsweise konstanten, Vorgabe, d.h. einer Steuerung im engeren Sinne, insbesondere auch einen Vergleich eines oder mehrerer zurückgeführter, erfasster Ist-Werte mit entsprechenden Soll-Werten, d.h. eine Regelung umfassen. Zur kompakteren Darstellung wird vorliegend sowohl ein Steuern ohne Rückführung ("forward control") als auch ein Regeln mit Rückführung ("feedback control") als Einstellen im Sinne der vorliegenden Erfindung bezeichnet, wobei in einer bevorzugten Ausführung eine Soll-Leistung vorgegeben, mit einer erfassten Ist-Leistung verglichen und die Leistung auf Basis dieser Regeldifferenz eingestellt wird.

Eine Peripheriekomponente kann stationär sein, d.h. ihre Position relativ zum kompletten Robotersystem, etwa einer Basis eines Roboters, nicht verändern, beispielsweise als Haltewerkzeug eines Bearbeitungstisches zum Halten eines Werkstückes, während dieses durch ein robotergeführtes Werkzeug bearbeitet wird. In einer bevorzugten Ausführung ist eine Peripheriekomponente, deren Leistung erfindungsgemäß eingestellt wird, selbst robotergeführt, insbesondere als Werkzeug, vorzugsweise Haltewerkzeug, an einem Werkzeugflansch eines Roboters des Robotersystems, welches einen oder mehrere Roboter umfassen kann. In einer bevorzugten Weiterbildung werden die Leistungen mehrerer Peripheriekomponenten eingestellt, wobei es sich gleichermaßen um robotergeführte und stationäre Komponenten handeln kann. Beispielsweise kann eine Haltekraft eines Haltewerkzeugs eines stationären Bearbeitungstisches, insbesondere eine hydraulische, pneumatische, (elektro)magnetische und/oder (elektro)motorische Spannvorrichtung eines Bearbeitungstisches, auf Basis einer ermittelten Kraft eingestellt werden, die ein robotergeführtes Werkzeug in Abhängigkeit von der Roboterbearbeitungsbahn auf das Werkstück ausübt oder die sich als Reaktionskraft auf eine solche Bearbeitungskraft am Haltewerkzeug einstellt. Zusätzlich oder alternativ kann beispielsweise die Haltekraft eines robotergeführten Haltewerkzeugs, insbesondere eines hydraulischen, pneumatischen, (elektro)magnetischen und/oder (elektro)motorischen Greifers, auf Basis einer ermittelten Kraft eingestellt werden, die ein gehaltenes Werkstück aufgrund von Gewichts-, Trägheits- und gyroskopischen Kräften auf das Haltewerkzeug ausübt.

Erfindungsgemäß wird, vorzugsweise durch ein Rechenmittel, eine Kraft ermittelt, die in Abhängigkeit von einer oder mehrerer Roboterposen, insbesondere einer Roboterbahn, die durch aufeinanderfolgende Posen vorgegeben sein kann, wirkt.

Die Kraft kann beispielsweise eine Kraft sein, welche - insbesondere durch ein robotergeführtes Werkstück - auf die Peripheriekomponente wirkt. Gleichermaßen kann die Kraft auch eine Kraft sein, die auf ein robotergeführtes Werkstück selber wirkt. Allgemein kann die Kraft, die erfindungsgemäß ermittelt wird, eine sogenannte innere oder Zwangskraft sein. Unter einer inneren bzw. Zwangskraft wird in fachüblicher Weise eine Kraft verstanden, die durch mechanische Bindungen der Peripheriekomponente und/oder eines Werkstückes, beispielsweise das Fixieren eines Werkstückes durch eine Peripheriekomponente in einem oder mehreren Freiheitsgraden, verursacht wird bzw. eine Zwangsführung vermittelt und außerhalb einer Systemgrenze um Peripheriekomponente und gegebenenfalls ein durch dieses beaufschlagtes Werkstück verschwindet. Eine solche Kraft kann in einer bevorzugten Ausführung als Schnittkraft zwischen Peripheriekomponente und Werkstück ermittelt werden, wenn Peripheriekomponente und Werkstück nach dem Prinzip von Euler gedanklich freigeschnitten werden, oder auch als sogenannte Zwangskraft-Nebenbedingung, die bestimmte Freiheitsgrade sperrt.

Die Kraft, die erfindungsgemäß ermittelt wird, kann gleichermaßen auch eine sogenannte äußere bzw. eingeprägte Kraft sein. Unter einer äußeren bzw. eingeprägten Kraft wird vorliegend in fachüblicher Weise eine Kraft verstanden, die aus physikalischen Randbedingungen wie Gravitations- oder Magnetfeldern und/oder Bewegungen resultiert und auf Peripheriekomponente und/oder Werkstück wirkt.

Insbesondere kann eine solche äußere bzw. eingeprägte Kraft eine Gewichtskraft, insbesondere der Peripheriekomponente und/oder eines Werkstückes, umfassen, die in unterschiedlichen Posen unterschiedliche Richtungen und/oder Größen aufweisen kann. Dabei ist zu berücksichtigen, dass, wie einleitend erläutert, die Kraft, die erfindungsgemäß ermittelt wird, gegebenenfalls nur eine oder mehrere Komponenten, beispielsweise in Wirkrichtung des Peripheriegerätes, umfassen kann.

Zusätzlich oder alternativ kann die Kraft eine oder mehrere Trägheitskräfte bzw. Komponenten hiervon umfassen, insbesondere das Produkt aus Masse/Trägheitstensor mit der Schwerpunkts-/Drehbeschleunigung der Peripheriekomponente und/oder eines Werkstückes, wobei insbesondere auch sogenannte gyroskopische oder Kreiselkräfte, d.h. Zentrifugal- und Corioliskräfte oder Komponenten hiervon die erfindungsgemäß ermittelte Kraft oder einen Teil von dieser bilden können.

Zusätzlich oder alternativ kann die Kraft eine oder mehrere Prozesskräfte umfassen. Insbesondere kann die Kraft eine Reibkraft oder eine Komponente hiervon umfassen, die zwischen der Peripheriekomponente, dem Werkstück und/oder der Umgebung wirkt.

Die Kraft, die erfindungsgemäß ermittelt wird, kann insbesondere von einem Zustand des Robotersystems, insbesondere eines Roboters und/oder der Peripheriekomponente, und/oder einem Zustand eines Werkstückes abhängen. Als Zustand wird dabei insbesondere im fachüblicher Weise die Lage, d.h. Position und/oder Orientierung, und/oder deren, insbesondere erste und/oder zweite, zeitliche Ableitung bezeichnet. So kann die Kraft insbesondere von einer Pose eines oder mehrerer Roboter des Robotersystems abhängen, zum Beispiel davon, ob ein Greifer eine Last von unten stützt oder von oben oder der Seite hält. Entsprechend hängt beispielsweise die infolge einer Drehbewegung auf eine Last wirkende Trägheitskraft von der Drehbewegung, insbesondere einer Winkelgeschwindigkeit und -beschleunigung, ab. Allgemein kann daher die erfindungsgemäß ermittelte Kraft insbesondere eine bewegungs- und/oder poseabhängige Kraft umfassen.

Um die Kraft zu ermitteln, kann diese, insbesondere während eines Betriebs des Robotersystems, messtechnisch erfasst werden. Beispielsweise können Kraftsensoren, etwa Dehnmessstreifen oder Piezosensoren, die vorzugsweise an der Peripheriekomponente, einem Roboter und/oder einer Schnittstelle zwischen beiden, insbesondere einem Werkzeugflansch des Roboters, angeordnet sein können, im Betrieb auftretende Kräfte erfassen. Bei der Ermittlung kann eine solcherart erfasste Kraft in einer bevorzugten Ausführung weiterverarbeitet, beispielsweise gefiltert, transformiert und/oder diskretisiert werden. In einer bevorzugten Ausführung fungiert ein Aktor einer Peripherikomponente zugleich als Sensor zur Erfassung einer Kraft. So kann beispielsweise aus der Leistungsaufnahme eines positionsgesteuerten Elektromotors oder eines Pneumatikgreifers die von diesem ausgeübte Kraft ermittelt werden. In einer bevorzugten Weiterbildung ist vorgesehen, die Kraft vorab während eines Probebetriebs des Robotersystems zu erfassen und einem späteren Automatikbetrieb als ermittelte Kraft zugrunde zu legen.

Zusätzlich oder alternativ kann die Kraft, vorzugsweise modellgestützt, abgeschätzt werden. Insbesondere kann aus einem mechanischen Ersatzmodell, das die Dynamik der Bewegung des Robotersystems abbildet, eine Kraft ermittelt werden, die beispielsweise zwischen einer Last und einem sie haltenden Greifer wirkt. Allgemein kann die Abschätzung während des Betriebs, insbesondere unter Berücksichtigung erfasster Bewegungsgrößen wie Gelenkpositionen, -geschwindigkeiten und/oder -beschleunigungen des Robotersystems, anstelle oder zusätzlich zur messtechnischen Erfassung erfolgen, um diese beispielsweise zu kontrollieren, zu kompensieren oder nicht beobachtbare Kräfte zu erfassen. In einer bevorzugten Ausführung wird die Kraft, insbesondere bei geplanten oder geteachten Bahnen, vorab abgeschätzt.

Insbesondere in diesem Fall kann es vorteilhaft sein, die Kraft während eines Betriebs des Robotersystems anzupassen, etwa, um Modellungenauigkeiten zu kompensieren. In diesem Zusammenhang sei darauf hingewiesen, dass eine rechnerische Abschätzung einen beliebigen Genauigkeitsgrad aufweisen kann. Eine Anpassung während des Betriebs kann beispielsweise auf Basis erfasster Messwerte für Kräfte erfolgen, die vorstehend beschrieben wurden. Gleichermaßen ist es möglich, die Kraft beispielsweise an eine geänderte Bahngeschwindigkeit anzupassen, mit der das Robotersystem eine vorgegebene Bahn abfährt. Dies kann in einer einfachen Ausgestaltung durch eine Erhöhung bzw. Reduzierung erfolgen, die proportional zu einer Änderung der Bahngeschwindigkeit gegenüber einer Ausgangsbahngeschwindigkeit, für die die Kraft ermittelt und die Leistung vorgegeben wurde, oder zu einem Polynom, insbesondere einer Potenz einer solchen Änderung ist. In einer aufwändigeren, genaueren Ausgestaltung kann während des Betriebs ein Modell des Robotersystems ausgewertet und die Leistung entsprechend angepasst werden.

Erfindungsgemäß wird eine Leistung, insbesondere eine Kraft, wenigstens einer Peripheriekomponente des Robotersystems nun auf Basis der ermittelten Kraft eingestellt. Dabei ist in einer bevorzugten Ausführung vorgesehen, dass die Leistung der Peripheriekomponente minimiert ist. Allgemein kann sie, insbesondere posenabhängig und/oder bahnabschnittsweise, gegenüber einer maximalen Leistung reduziert werden, wie sie während des Betriebs maximal an der Peripheriekomponente anfällt, insbesondere von dieser aufgenommen oder abgegeben wird. Insbesondere kann also eine von einer Peripheriekomponente ausgeübte Kraft, vorzugsweise posenabhängig und/oder bahnabschnittsweise, gegenüber einer maximalen Kraft reduziert werden, wie sie während des Betriebs maximal von der Peripheriekomponente ausgeübt wird oder werden muss.

Dabei kann insbesondere eine Größe der Leistung der Peripheriekomponente kontinuierlich eingestellt, also zum Beispiel in Abhängigkeit von einer Roboterpose oder -bahn mit kontinuierlich bzw. quasi-kontinuierlich variierenden Werten vorgegeben werden, wobei vorzugsweise die Leistung in Abhängigkeit von einer Regeldifferenz zwischen vorgegebener und während des Betriebs ermittelter Leistung geregelt wird.

Gleichermaßen kann die Größe der Leistung der Peripheriekomponente auch diskretisiert eingestellt werden. In einer bevorzugten Ausführung kann dies durch wahlweises Zu- und Abschalten von Komponentenmitteln erfolgen, indem beispielsweise ein oder mehrere Pneumatikdüsen eines Pneumatikgreifers wahlweise zu- oder abgeschaltet werden, um dessen Leistung bedarfsgerecht zu erhöhen bzw. zu reduzieren. In einer bevorzugten Weiterbildung erfolgt die Zu- bzw. Abschaltung von Komponentenmitteln derart, dass die aktiven Komponentenmitteln jeweils eine symmetrische Anordnung bilden. Zusätzlich oder alternativ kann die Zu- bzw.

Abschaltung von Komponentenmitteln derart erfolgen, dass die Peripheriekomponente ein möglichst großes oder ein möglichst kleines Drehmoment ausübt.

Die Leistung der Peripheriekomponente kann über einer Bahn des Robotersystems, die kurz als Roboterbahn bezeichnet wird, kontinuierlich eingestellt werden, indem zum Beispiel ein Rechenmittel in einem Regeltakt Pneumatikdüsen eines Pneumatikgreifers je nach Position auf der Bahn zu- oder abschaltet. Gleichermaßen kann die Leistung auch eingangsseitig diskretisiert sein. Insbesondere können diskrete Schaltpunkte längs der Bahn vorgesehen sein, bei deren Erreichen die Leistung der Peripheriekomponente verändert wird. Dies bietet den Vorteil, dass Schaltpunktfunktionalitäten, die bereits heute in vielen Robotersystemsteuerungen implementiert sind, zur Umsetzung der vorliegenden Erfindung, d.h. der Einstellung der Leistung der Peripheriekomponente auf Basis einer ermittelten Kraft, die in Abhängigkeit von einer Roboterpose bzw. -bahn wirkt, genutzt werden können.

In einer bevorzugten Ausführung wird die Leistung der Peripheriekomponente nur auf Basis der ermittelten Kraft eingestellt, falls bzw. solange kein Übersteuersignal vorliegt. Ein Übersteuersignal ermöglicht in dieser bevorzugten Ausführung die Übersteuerung der erfindungsgemäßen Einstellung der Leistung der Peripheriekomponente auf Basis einer ermittelten Kraft, falls dies erforderlich ist, insbesondere stattdessen eine Einstellung der Leistung der Peripheriekomponente auf einen vorgegebenen, dem Übersteuersignal zugeordneten Wert.

Ein Übersteuersignal im Sinne der vorliegenden Erfindung kann insbesondere ein Not-Halt-Signal bzw. das Ausbleiben eines, etwa mittels einer Watchdog-Funktionalität überwachten, Freigabesignals sein. Wird beispielsweise ein Not-Halt ausgelöst, kann es vorteilhaft sein, ein Werkstück unabhängig von einer Energieoptimierung aus Sicherheitsgründen mit erhöhter, insbesondere maximal möglicher oder zulässiger Haltekraft zu halten, um einen Verlust des Werkstückes aufgrund der bei einem Not-Halt auftretenden hohen Verzögerungen sicher zu verhindern. Daher ist in einer bevorzugten Weiterbildung allgemein vorgesehen, dass bei Vorliegen des Übersteuersignals die Leistung, insbesondere Kraft, der Peripheriekomponente, auf einen vorgegebenen, vorzugsweise maximal möglichen oder zulässigen, Wert eingestellt wird.

Eine Peripheriekomponente kann, insbesondere aufgrund von Regelverzögerungen, mechanischen, hydraulischen oder anderen Reaktionsträgheiten und dergleichen, eine gewisse Zeit benötigen, bis eine gewünschte Leistung eingestellt ist, d.h. bis eine tatsächliche Ist-Leistung, insbesondere -Kraft, wenigstens im Rahmen einer Steuer- bzw. Regeltoleranz, einem eingestellten Soll-Wert entspricht. Daher ist in einer bevorzugten Ausführung vorgesehen, dass eine Roboterbewegung zur Kompensation einer Reaktionsträgheit bzw. -zeit der Peripheriekomponente verzögert und/oder verlangsamt wird. Muss beispielsweise eine Haltekraft eines Robotergreifers für einen bestimmten Bahnabschnitt erhöht werden, kann das Abfahren dieses Bahnabschnittes um eine vorgegebene Zeitspanne verzögert werden, so dass sichergestellt ist, dass der Robotergreifer die höhere Haltekraft aufgebaut hat, wenn dieser Bahnabschnitt abgefahren wird.

Vorteilhafterweise kann dieser Aspekt insbesondere mit dem vorstehend erläuterten Aspekt des Übersteuersignals kombiniert sein, indem beispielsweise bei einem Not-Halt der Kategorie STOP 1 oder STOP 2 das Abfahren einer Bremsrampe um einige Millisekunden verzögert wird, um eine Robotergreifer Zeit zu geben, eine hierfür erforderliche maximale Haltekraft aufzubauen. Die Reaktionsträgheit der Peripheriekomponente kann beispielsweise empirisch oder rechnerisch ermittelt oder in einer einfachen Variante für eine oder mehrere Peripheriekomponenten nach oben abgeschätzt werden. Allgemein ist daher in einer bevorzugten Ausführung vorgesehen, dass eine Roboteransteuerung, insbesondere eine Roboterbewegung, auf Basis einer Peripheriekomponente, deren Leistung eingestellt wird, insbesondere auf Basis einer Reaktionsträgheit bzw. -zeit der Peripheriekomponente, modifiziert, insbesondere verzögert und/oder verlangsamt wird, vorzugsweise um einen vorgegebenen Wert. Der vorgegebene Wert kann von der Peripheriekomponente abhängen, beispielsweise für reaktionsschnellere Peripheriekomponenten niedriger sein. Gleichermaßen ist es möglich, allgemein einen Wert vorzugeben, der für alle Peripheriekomponenten verwendet wird. Vorzugsweise beträgt der vorgegebene Wert höchstens 10 ms, insbesondere höchstens 5 ms.

Ein erfindungsgemäßes Rechenmittel dient zum Vorgeben einer Leistung, insbesondere einer Kraft, einer Peripheriekomponente eines Robotersystems auf Basis einer ermittelten Kraft, die in Abhängigkeit von wenigstens einer Roboterpose, insbesondere einer Roboterbahn, wirkt. Dies kann, wie vorstehend erläutert, soft- und/oder hardwaremäßig implementiert sein und insbesondere eine modellgestützte, wenigstens teilweise automatisierte Abschätzung der Kraft durchführen. Gleichermaßen ist es auch möglich, die auftretende Kraft während eines Probebetriebs vorab oder online während des Betriebs zu erfassen und auf Basis dieser erfassten Kraft die Leistung einzustellen. Die Vorabermittlung, insbesondere anhand eines Modells des Robotersystems und einer vorab bekannten, insbesondere geplanten, Roboterbahn, ermöglicht im Gegensatz zu einer Leistungseinstellung während des Betriebs auf Basis einer dabei erfassten Kraft vorteilhafterweise eine vorausschauende Leistungseinstellung. Insbesondere bei einer Einstellung auf Basis einer im Betrieb erfassten Kraft kann es vorteilhaft sein, die ermittelte Kraft mit einem Sicherheitsfaktor zu multiplizieren, der größer als 1 ist, um so auch bei unvorhergesehenen Beschleunigungen oder Kontakten eine ausreichende Leistung der Peripheriekomponente zur Verfügung zu stellen. Allgemein ist in einer bevorzugten Ausführung der vorliegenden Erfindung vorgesehen, dass eine erfasste oder abgeschätzte Kraft um einen vorgegebenen, vorzugsweise bahnabhängigen, Sicherheitsfaktor erhöht wird, um die Kraft zu ermitteln, auf deren Basis erfindungsgemäß eine Leistung einer Peripheriekomponente einzustellen ist.

Weitere Vorteile und Merkmale ergeben sich aus den Unteransprüchen und den Ausführungsbeispielen. Hierzu zeigt, teilweise schematisiert:

Fig. 1: ein Robotersystem mit einer Peripheriekomponente;

Fig. 2A, B: Verläufe von Zustandsgrößen des Robotersystems der Fig.1; und

Fig. 2C: Verläufe einer Leistung der Peripheriekomponente der Fig.1, die nach einer Ausführung der vorliegenden Erfindung gesteuert wird.

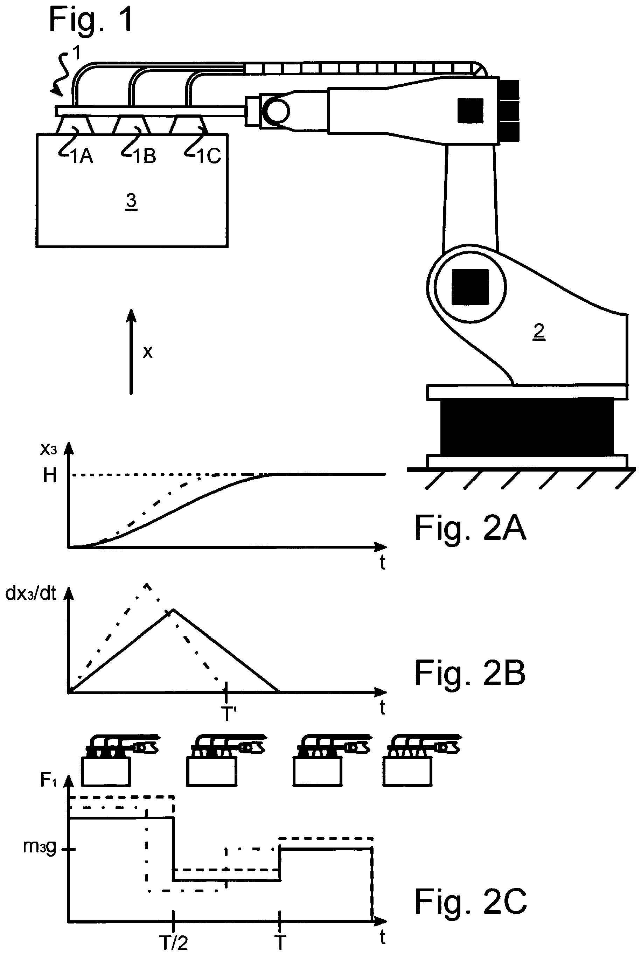

Fig. 1 zeigt ein Robotersystem in Form einer Palletierzelle mit einem sechsachsigen Knickarmroboter 2 mit einer robotergeführten Peripheriekomponente in Form eines Pneumatikgreifers 1 mit drei Komponentenmitteln in Form von Saug- bzw. Pneumatikdüsen 1A - 1C, deren Druck einzeln durch wahlweises Verbinden oder Trennen mit einem Unterdruckreservoir (nicht dargestellt) durch ein Einstell- und Rechenmittel gesteuert wird, welches in einer Steuerung des Roboters 2 bzw. der Palletierzelle integriert ist (nicht dargestellt). Die wahlweise Beaufschlagung einer Saugdüse wird als Einstellen der Leistung des Pneumatikgreifers 1 im Sinne der vorliegenden Erfindung verstanden, da damit eine vom Pneumatikgreifer aufgebrachte Haltekraft eingestellt wird.

Der Roboter greift ein Werkstück bzw. eine Last 3, beispielsweise ein Paket, und hebt dieses vertikal in die Höhe, wo er es absetzt, nachdem ein anderer Roboter dieses unterfahren hat (nicht dargestellt). Dies wird beschrieben durch die x-Koordinate des TCPs des Roboters 2 bzw. des Schwerpunkts der Nutzlast 3, die von der Ausgangshöhe 0 auf die Höhe H angehoben wird, die sie im Ausgangsfall zum Zeitpunkt T bzw. T' erreicht (vgl. Fig. 2, insbesondere Fig. 2A).

Dazu ist, beispielsweise durch eine Bahnplanung vorab oder durch Teachen, eine entsprechende Roboterbahn $x_3 = x(s)$ vorgegeben, die der Roboter 2 mit einem vorgegebenen Geschwindigkeitsprofil s = s(t) abfährt, wobei s einen Bahnparameter und $t$ die Zeit bezeichnen. Rein exemplarisch sind zwei vorgegebene Zeitverläufe dargestellt, wie sie sich aus den industrieüblichen Beschleunigungstrapezprofilen ergeben, zum Einen:

$$\begin{Bmatrix} 0 \le t < \dfrac{T}{2} \\ \dfrac{T}{2} \le t < T \\ sonst \end{Bmatrix} \Leftrightarrow \begin{Bmatrix} \dfrac{dx_3}{dt} = \left( \dfrac{4 \cdot H}{T^2} \right) \cdot t \\ \dfrac{dx_3}{dt} = \left( \dfrac{4 \cdot H}{T^2} \right) \cdot (T - t) \\ 0 \end{Bmatrix} \quad (1),$$

der in Fig. 2 ausgezogen dargestellt ist, sowie der in Fig. 2 strichpunktierte Verlauf, bei dem $T$ durch T'< $T$ ersetzt ist.

Aus einem einfachen Modell kann für diese vorgegebene Bewegung vorab die Kraft $F_1$ ermittelt werden, die der Greifer 1 hierzu auf die Last 3 ausüben muss. Sie ergibt sich nach virtuellem Freischneiden der Last 3 vom Greifer 1 und dessen Ersatz durch die Zwangskraft $F_1$ aus dem Impulssatz:

$$m_3 \cdot \frac{d^2 x_3}{dt^2} = -m_3 \cdot g + F_1 \quad (2)$$

mit (1) und dem Schwerkraftvektor g zu

$$\left.\begin{array}{l} 0 \le t < \dfrac{T}{2} \\[1em] \dfrac{T}{2} \le t < T \\[1em] Last\ gehalten \\[0.5em] ohne\ Last \end{array}\right\} \Leftrightarrow F_1 = m_3 \cdot \left\{\begin{array}{c} \left(g + \dfrac{4 \cdot H}{T^2}\right) \\[1em] \left(g - \dfrac{4 \cdot H}{T^2}\right) \\[1em] g \\[0.5em] 0 \end{array}\right\} \qquad (3)$$

und ist in Fig. 2C für die beiden in Fig. 2A, 2B dargestellten Verläufe entsprechend ausgezogen bzw. strichpunktiert eingezeichnet. Man erkennt, dass durch den Greifer 1 während des Anhebens mit konstanter positiver Beschleunigung ($0 \le t < T/2$) zusätzlich zur Gewichtskraft $m_3 g$ Trägheitskräfte $m_3 \mathrm{d}^2 x/\mathrm{d}t^2$ zu kompensieren sind, die umgekehrt während der Bremsphase ($T/2 \le t < T$) die aufzubringende Haltekraft reduzieren, die im Stillstand bei gehaltener Last gerade deren Gewichtskraft das Gleichgewicht hält und ansonsten gleich Null ist. Weiter ist in Fig. 2C durch den Vergleich des ausgezogenen mit dem strichpunktierten Verlauf, der ein Anheben in der kürzeren Zeit T' darstellt, erkennbar, dass bei rascherem Anheben entsprechend höhere Trägheitskräfte auftreten.

Erfindungsgemäß wird die von Pneumatikgreifer 1 zu leistende Kraft ermittelt, beispielsweise, wie vorstehend für ein einfaches Beispiel gezeigt, durch modellgestützte Abschätzung der Zwangskraft $F_1$. Allgemein kann für ein Robotersystem, das durch die Minimalkoordinaten $\boldsymbol{q}$, beispielsweise die Gelenkpositionen seines Roboters bzw. seiner Roboter beschrieben wird, die Bewegung $\boldsymbol{r}(t)$ einer Last durch diese Minimalkoordinaten beschrieben werden, wobei Zwangskräfte, die zwischen der Last und dem bzw. den Robotern wirken, um diese Bewegung $\boldsymbol{r}(\boldsymbol{q}(t))$ hervorzurufen, beispielsweise mit den Lagrangeschen Gleichungen erster Art ermittelt werden können, wie dies etwa in H. Bremer, Dynamik und Regelung mechanischer Systeme, Teubner, Stuttgart, 1988 offenbart ist. Ist die Roboterbahn $\boldsymbol{q}(t)$ nicht vorab bekannt, können beispielsweise während des Betriebs Kräfte, die in Halterichtung auf den Greifer 1 wirken, durch Ermittlung der kinematischen Größen $x_3$, $\mathrm{d}x_3/\mathrm{d}t$, $\mathrm{d}^2 x_3/\mathrm{d}t^2$ ebenfalls mit (2) modellgestützt abgeschätzt werden. Sie können gleichermaßen beispielsweise durch einen Kraftsensor zwischen dem Pneumatikgreifer 1 und dem ihn tragenden Werkzeugflansch des Roboters 2 erfasst werden, wenn das Messergebnis um die Gewichts- und Trägheitskräfte des Greifers 1 bereinigt wird.

Nun wird erfindungsgemäß eine Leistung der Peripheriekomponente bzw. des Greifers 1, im Ausführungsbeispiel die Anzahl seiner mit dem Unterdruckreservoir verbundenen und damit Leistung von diesem aufnehmenden bzw. Kraft auf die Last 3 ausübenden Saugdüsen, auf Basis der wie vorstehend beschrieben ermittelten Kraft $F_1$ eingestellt, die in Abhängigkeit von der Roboterbahn $x_3(t)$ zwischen Greifer 1 und Last 3 wirken muss, um die Last am Greifer zu halten. In Fig. 2C sind hierzu strichliert die jeweils eingestellte Saugleistung des Pneumatikgreifers 1 für das in Fig. 2A, 2B ausgezogen dargestellten Geschwindigkeitsprofil mit der Endzeit T eingezeichnet und die jeweils aktivierten Saugdüsen 1A, 1B bzw. 1C angedeutet. Man erkennt, dass die Leistung des Pneumatikgreifers 1 durch das Zu- und Abschalten von Saugdüsen wertediskretisiert ist und, dem Verlauf der Zwangskraft $F_1$ folgend, in Abhängigkeit von der Roboterbahn $x_3(t)$ eingestellt wird. Dabei übersteigt die eingestellte Leistung stets die erforderliche Zwangskraft, wie sie sich aus der Gewichts- und Trägheitskraft der Nutzlast 3 ergibt. Dies gilt auch, wenn in einem Override-Modus das Geschwindigkeitsprofil verändert, im Ausführungsbeispiel die Bahn schneller innerhalb der Zeit T' abgefahren wird (strichpunktiert in Fig. 2). Dem kann beispielsweise durch eine erneute Ermittlung der Zwangskraft $F_1$ gem. (3) mit der Substitution T → T' oder dadurch Rechnung getragen werden, dass die für die Ausgangsbahn ermittelte Saugleistung mit (T'/T) multipliziert wird.

Indem durch Einstellung seiner Leistung der Greifer stets die minimal erforderliche Kraft zuzüglich einer gewissen Sicherheitsreserve ausübt, wird einerseits das zuverlässige Anheben der Last 3 sichergestellt und zugleich der Energieverbrauch der Peripheriekomponente, in diesem Fall die Unterdruckentnahme aus dem Unterdruckreservoir, minimiert.

Dabei erfolgt die Einstellung der Leistung, wie symbolisch in Fig. 2C angedeutet, diskretisiert durch wahlweises Zu- und Abschalten bestimmter Saugdüsen 1A-1C, wobei in Fig. 2C aktive, mit dem Unterdruckreservoir verbundene Saugdüsen ausgefüllt dargestellt sind. Wie aus Fig. 2C erkennbar, werden während der positiven Beschleunigungsphase ($0 \le t < T/2$) alle drei Saugdüsen 1A-1C aktiviert, während der negativen Beschleunigungsphase ($T/2 \le t < T$) nur die zentrale Saugdüse 1B, und während des Haltens die beiden außenliegenden Saugdüsen 1A, 1C, so dass sich jeweils eine symmetrische Anordnung ergibt, die die Last statisch stabil hält und kein Kippmoment auf die Last 3 ausübt.

An obigem Beispiel wird deutlich, dass während des Betriebs bei erfindungsgemäßer Steuerung der Peripheriekomponente 1 durch wahlweises Zu- bzw. Abschalten der einzelnen Saugdüsen 1A-1C zwischen Nutzlast 3 und Pneumatikgreifer 1 eine Kraft wirkt, die sich aus der Querschnittsfläche der aktiven Düsen und dem in diesen anliegenden Unterdruck bestimmt. Diese Kraft ist stets so gewählt, dass sie die vorstehend erläuterte Kraft $F_1$ mit ausreichender

Sicherheitsreserve übersteigt.

Entsprechend kann im Ausführungsbeispiel die innere Kraft $F_1$ zwischen Greifer 1 und Last 3 ermittelt werden. Dies kann, wie vorstehend erläutert, modellgestützt mit dem mechanischen Ersatzmodell (1) erfolgen, indem die Zwangskraft berechnet wird, die zum Bewirken der vorgegebenen Bewegung, d.h. dem Mitführen der Last 3 durch den Robotergreifer 1, erforderlich ist. Diese entspricht, wie aus dem Ausführungsbeispiel hervorgeht, nicht der gesamten Kraft, die tatsächlich zwischen Greifer 1 und Last 3 wirkt. Diese ergibt sich aus der Anzahl und Wirkfläche der aktiven Saugdüsen 1A, 1B, 1C und dem in ihnen anliegenden Unterdruck und wird erfindungsgemäß so eingestellt, dass sie die Zwangskraft übersteigt. Gleichermaßen kann aber auch in einer nicht dargestellten Abwandlung eine tatsächlich zwischen Greifer 1 und Last 3 wirkende Kraft erfasst werden, etwa durch einen Kraftsensor. Indem nun die von Greifer 1 ausgeübte Kraft so eingestellt wird, dass eine zwischen Greifer 1 und Last 3 wirkende, durch einen Kraftsensor erfasste Zugkraft minimal ist und dabei positiv bleibt, kann ebenfalls der Energieverbrauch des Greifers 1 minimiert werden.

Es ist, wie an dem Ausführungsbeispiel deutlich wird, auch möglich, die äußere Kraft als Summe aus Gewichts- und Trägheitskraft abzuschätzen und der Einstellung der Leistung des Greifers 1 zugrunde zu legen, da die von ihm ausgeübte Haltekraft dieser äußeren Kraft stets mindestens das Gleichgewicht halten muss. Dies kann wiederum modellgestützt mit (1) erfolgen. Gleichermaßen ist auch hier eine Messung der äußeren Kraft möglich, beispielsweise, indem ein Kraftsensor zwischen Greifer 1 und Roboter 2 die Kraft in x-Richtung erfasst, die der Greifer 1 mit Last 3 auf den Roboter 2 ausübt, und hieraus durch Abzug der Gewichts- und Trägheitskraft des Greifers 1 die äußere Kraft auf die Nutzlast 3 und damit die vom Pneumatikgreifer 1 aufzubringende Leistung ermittelt.

Wird, beispielsweise durch Betätigung eines Not-Aus-Tasters (nicht dargestellt), ein Not-Halt ausgelöst, werden unabhängig von der aktuellen Roboterbahn stets alle Saugdüsen aktiviert, so dass diese eine vorgegebenen, maximal mögliche Haltekraft ausüben und so bei dem durch den Not-Halt induzierten Bremsvorgang des Roboters einen Verlust der Last 3 aufgrund der dabei auftretenden hohen Verzögerungen verhindern.

Wird ein Not-Halt der Kategorie STOP 1 oder STOP 2 Nothalt ausgelöst, bei dem der Roboter motorisch eine Bremsrampe abfährt, um möglichst rasch zum Stillstand zu kommen, wird der Beginn dieser Bremsrampe um wenige Millisekunden verzögert. Dies gibt dem Pneumatikgreifer Zeit, wie vorstehend erläutert alle Saugdüsen zu aktivieren und so während der gesamten Bremsrampe die maximal mögliche Haltekraft zur Verfügung zu stellen.

Bezugszeichenliste

    1 Pneumatikgreifer (Peripheriekomponente)
    1A-1C Saugdüse
    2 Roboter(system)
    3 Nutzlast (Werkstück)

**Patentansprüche**

1. Verfahren zum Steuern einer Peripheriekomponente (1) eines Robotersystems (2), wobei eine Leistung, insbesondere eine Kraft, der Peripheriekomponente auf Basis einer ermittelten Kraft ($F_1$; $m_3 g + m_3 d(x_3)^2/dt^2$) eingestellt wird, die in Abhängigkeit von wenigstens einer Roboterpose, insbesondere einer Roboterbahn ($x_3(t)$), wirkt, **dadurch gekennzeichnet,**

    - **dass** die Leistung der Peripheriekomponente auf Basis der ermittelten Kraft eingestellt wird, falls kein Not-Halt-Signal vorliegt und die Leistung der Peripheriekomponente auf einen maximal zulässigen Wert eingestellt wird, falls ein Not-Halt-Signal vorliegt; und/oder
    - **dass** eine Roboterbewegung auf Basis einer Reaktionszeit der Peripheriekomponente, insbesondere um einen vorgegebenen Wert, verzögert und/oder verlangsamt wird.

2. Verfahren nach Anspruch 1, **dadurch gekennzeichnet, dass** eine minimale Leistung der Peripheriekomponente eingestellt wird.

3. Verfahren einem der vorhergehenden Ansprüche, **dadurch gekennzeichnet, dass** die Kraft, auf deren Basis die Leistung der Peripheriekomponente eingestellt wird, insbesondere modellgestützt, abgeschätzt, und/oder, insbesondere während eines Betriebs des Robotersystems, erfasst wird.

4. Verfahren nach Anspruch 3, **dadurch gekennzeichnet, dass** die Kraft, auf deren Basis die Leistung der Peripheriekomponente eingestellt wird, vorab abgeschätzt und/oder während eines Betriebs des Robotersystems, insbesondere entsprechend einer Geschwindigkeit, angepasst wird.

5. Verfahren nach einem der vorhergehenden Ansprüche, **dadurch gekennzeichnet, dass** die Kraft, auf deren Basis die Leistung der Peripheriekomponente eingestellt wird, eine zustandsabhängige Kraft, insbesondere eine bewegungs- und/oder posenabhängige, Kraft umfasst.

6. Verfahren nach Anspruch 5, **dadurch gekennzeichnet, dass** die Kraft, auf deren Basis die Leistung der Peripheriekomponente eingestellt wird, eine innere Kraft ($F_1$) und/oder eine äußere Kraft, insbesondere eine Gewichtskraft ($m_3g$), Trägheitskraft ($m_3\mathrm{d}(x_3)^2/\mathrm{d}t^2$) und/oder Prozesskraft umfasst, die auf die Peripheriekomponente (1) oder ein robotergeführtes Werkstück (3) wirkt.

7. Verfahren nach einem der vorhergehenden Ansprüche, **dadurch gekennzeichnet, dass** die Peripheriekomponente (1) robotergeführt oder stationär ist, und/oder dass die Peripheriekomponente (1) ein Werkzeug, insbesondere ein Haltewerkzeug (1) zum Halten eines Werkstücks (3), aufweist.

8. Verfahren nach einem der vorhergehenden Ansprüche, **dadurch gekennzeichnet, dass** eine Größe der Leistung der Peripheriekomponente kontinuierlich oder diskretisiert, insbesondere durch wahlweises Zu- und Abschalten von Komponentenmitteln (1A-1C), eingestellt wird.

9. Verfahren nach einem der vorhergehenden Ansprüche, **dadurch gekennzeichnet, dass** die Leistung der Peripheriekomponente kontinuierlich oder diskretisiert, insbesondere durch Schaltpunkte, in Abhängigkeit von einer Roboterbahn eingestellt wird.

10. Vorrichtung zum Steuern einer Peripheriekomponente (1) eines Robotersystems (2), insbesondere zum Steuern eines Robotersystems mit einer Peripheriekomponente, mit einem Einstellmittel zum Einstellen einer Leistung der Peripheriekomponente, **dadurch gekennzeichnet, dass** die Vorrichtung zur Durchführung eines Verfahrens nach einem der vorhergehenden Ansprüche eingerichtet ist.

11. Rechenmittel zum Vorgeben einer Leistung einer Peripheriekomponente (1) eines Robotersystems (2) nach einem Verfahren nach einem der vorhergehenden Ansprüche 1-9.

**Claims**

1. A method of controlling a peripheral component (1) of a robot system (2), wherein a power, in particular a force, of the peripheral component is set on the basis of a determined force ($F_1$; $m_3g + m_3\mathrm{d}(x_3)^2/\mathrm{d}t^2$), which acts in dependence on at least one robot pose, in particular a robot path ($x_3(t)$), **characterized in**

   - **that** the power of the peripheral component is set on the basis of the determined force if no emergency stop signal is present, and the power of the peripheral component is set to a maximum acceptable value if an emergency stop signal is present; and/or
   - **that** a robot movement is delayed and/or slowed down, in particular by a predetermined value, on the basis of a reaction time of the peripheral component.

2. The method according to claim 1, **characterized in that** a minimum power of the peripheral component is set.

3. The method according to any one of the preceding claims, **characterized in that** the force, on the basis of which the power of the peripheral component is set, is estimated, in particular with the aid of a model, and/or is detected, in particular during an operation of the robot system.

4. The method according to claim 3, **characterized in that** the force, on the basis of which the power of the peripheral component is set, is estimated in advance and/or is adjusted during an operation of the robot system, in particular corresponding to a speed.

5. The method according to any one of the preceding claims, **characterized in that** the force, on the basis of which the power of the peripheral component is set, comprises a state-dependent force, in particular a movement-dependent and/or pose-dependent force.

**6.** The method according to claim 5, **characterized in that** the force, on the basis of which the power of the peripheral component is set, comprises an inner force ($F_1$) and/or an outer force, in particular a weight force ($m_3g$), inertia force ($m_3\mathrm{d}(x_3)^2/\mathrm{d}t^2$) and/or a process force which acts on the peripheral component (1) or a robot-guided workpiece (3).

**7.** The method according to any one of the preceding claims, **characterized in that** the peripheral component (1) is robot-guided or stationary, and/or that the peripheral component (1) comprises a tool, in particular a holding tool (1) for holding a workpiece (3).

**8.** The method according to any one of the preceding claims, **characterized in that** a quantity of the power of the peripheral component is set continuously or discretized, in particular by selective connection or disconnection of component means (1A-1C).

**9.** The method according to any one of the preceding claims, **characterized in that** the power of the peripheral component is set continuously or discretized, in particular by means of switching points, in dependence on a robot path.

**10.** A device for controlling a peripheral component (1) of a robot system (2), in particular for controlling a robot system with a peripheral component, comprising a setting means for setting a power of the peripheral component, **characterized in that** the device is arranged for carrying out a method according to any one of the preceding claims.

**11.** A computing means for specifying a power of a peripheral component (1) of a robot system (2) according to a method according to any one of the preceding claims 1 to 9.

## Revendications

**1.** Procédé de commande d'un composant périphérique (1) d'un système robotisé (2), dans lequel une puissance, en particulier une force, du composant périphérique est réglée sur la base d'une force déterminée ($F_1$ ; $m_3g$ + $m_3\mathrm{d}(x_3)^2/\mathrm{d}t^2$), qui agit en fonction d'au moins une position de robot, en particulier d'une trajectoire de robot ($x_3(t)$), **caractérisé en ce**

- **que** la puissance du composant périphérique est réglée sur la base de la force déterminée, si aucun signal d'arrêt d'urgence n'est présent et la puissance du composant périphérique est réglée sur une valeur maximum admissible, si un signal d'arrêt d'urgence est présent ; et/ou
- **qu'**un mouvement de robot est retardé et/ou ralenti sur la base d'un temps de réaction du composant périphérique, en particulier d'une valeur prédéfinie.

**2.** Procédé selon la revendication 1, **caractérisé en ce qu'**une puissance minimum du composant périphérique est réglée.

**3.** Procédé selon l'une quelconque des revendications précédentes, **caractérisé en ce que** la force, sur la base de laquelle la puissance du composant périphérique est réglée, est estimée, en particulier sur la base d'un modèle, et/ou détectée, en particulier pendant un fonctionnement du système robotisé.

**4.** Procédé selon la revendication 3, **caractérisé en ce que** la force, sur la base de laquelle la puissance du composant périphérique est réglée, est estimée au préalable et/ou adaptée pendant un fonctionnement du système robotisé, en particulier en fonction d'une vitesse.

**5.** Procédé selon l'une quelconque des revendications précédentes, **caractérisé en ce que** la force, sur la base de laquelle la puissance du composant périphérique est réglée, comprend une force dépendant de l'état, en particulier une force dépendant du mouvement et/ou de la position.

**6.** Procédé selon la revendication 5, **caractérisé en ce que** la force, sur la base de laquelle la puissance du composant périphérique est réglée, comprend une force interne ($F_1$) et/ou une force externe, en particulier un poids ($m_3g$), une force d'inertie ($m_3\mathrm{d}(x_3)^2/\mathrm{d}t^2$) et/ou une force de processus, qui agit sur le composant périphérique (1) ou une pièce guidée par robot (3).

**7.** Procédé selon l'une quelconque des revendications précédentes, **caractérisé en ce que** le composant périphérique (1) est guidé par robot ou stationnaire, et/ou que le composant périphérique (1) présente un outil, en particulier un outil de retenue (1) pour retenir une pièce (3).

8. Procédé selon l'une quelconque des revendications précédentes, **caractérisé en ce qu'**une grandeur de la puissance du composant périphérique est réglée en continu ou discrétisée, en particulier par connexion et déconnexion sélective de moyens de composant (1A-1C).

9. Procédé selon l'une quelconque des revendications précédentes, **caractérisé en ce que** la puissance du composant périphérique est réglée en continu ou discrétisée, en particulier par des points de commutation, en fonction d'une trajectoire de robot.

10. Dispositif de commande d'un composant périphérique (1) d'un système robotisé (2), en particulier de commande d'un système robotisé avec un composant périphérique, avec un moyen de réglage pour le réglage d'une puissance du composant périphérique, **caractérisé en ce que** le dispositif est aménagé pour la réalisation d'un procédé selon l'une quelconque des revendications précédentes.

11. Moyen de calcul pour prédéfinir une puissance d'un composant périphérique (1) d'un système robotisé (2) selon un procédé selon l'une quelconque des revendications précédentes 1-9.

# Fig. 1

$x$

$x_3$

H

## Fig. 2A

$dx_3/dt$

T'

## Fig. 2B

$F_1$

$m_3g$

T/2    T

## Fig. 2C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009076657 A1

- US 20080077361 A1

**In der Beschreibung aufgeführte Nicht-Patentliteratur**

- **N. TSOURVELOUDIS.** Suction Control of a Robotic Gripper - A Neuro-Fuzzy Approach. *Journal of Intelligent and Robotic Systems,* 2000, vol. 27, S.215-S.235

- **H. BREMER.** Dynamik und Regelung mechanischer Systeme. Teubner, 1988